# EUROPEAN PATENT APPLICATION

(11) **EP 2 164 289 A1**
(43) Date of publication of application: **17.03.2010**
(21) Application number: 08105337.3
(22) Date of filing: 12.09.2008
(51) Int. Cl.: H04W 36/14

(54) **Method for changing radio channels, composed network and access router**

(71) Applicant: Nokia Siemens Networks OY, 02610 Espoo (FI)
(72) Inventor: Gotthard, Petr, 63900 Brno (CZ); Pollak, Christoph, 1190 Wien (AT)
(74) Representative: Bruglachner, Thomas E.

(57) **Abstract**

Disclosed is a method for changing radio channels (42, 44), comprising:
- Transmission of first data between (D1) between a first user device and a second device (198) via a first network element (22) and via a first radio channel (42),
- Using (80) transmitting channel (50) between the first network element (22) and a second network element (26) to transmit second data (D2) between the first user device (40) and the second device (198), and
- Transmission of third data between the first user device (40) and the second device (198) via the second network element (26) and the second radio channel (44).

## Description

The present invention relates generally to a method for changing radio channels. There may be a transmission of first data between a first user device and a second device via a first network element and via a first radio channel. The data may be speech data, especially telephone data, picture data, program data, etc. The data may be transmitted in data packets that contain a destination address and a source address. Alternatively, a path identifier may be included in a data packet.

The first network element may be an edge node of a telephone network, i.e. of a GSM (Global System Mobile) or UMTS (Universal Mobile Telecommunications System). This means, that packet switching and/or circuit switching may be used to transmit the first data.

The first radio channel may use a high frequency in the microwave frequency band, for instance in a range of 1 Gigahertz to 10 Gigahertz. There are several modulation types that may be applied to transmit data over the radio channel, for instance OFMD (Octagonal Frequency Multiplexing Diversion), TDMA (Time Division Multiplexing Access), etc.

There is a need for using the first user device also in a second network that is different from the first network. It may be desirable to use the same cell phone in a telephone and in a WLAN (Wireless Local Area network) network, see for instance IEEE (Institute of Electrical and Electronics Engineers) 802.11 or WiFi.

It is an object of the invention to provide a method for changing radio channels, a composed network and an access router, which allow a transfer between two networks.

Especially, the transfer should take place with no interruption of data transmission to the first user device or from the first user device or with at least as possible interruption. The interruption time should be smaller than 150 milliseconds or even smaller than 50 milliseconds.

This need is accomplished by the subject matter of the independent claims. The sub claims refer to specific embodiments of the present invention.

A method for changing radio channels is given, comprising:
- transmission of first data between the first user device and a second device via a first network element and via the first radio channel,
- using a transmission channel between the first network element and a second network element to transmit second data between the first user device and the second device,
- transmission of third data between the first user device and the second device via the second network element and via a second radio channel.

The technical effect of using two networks is that the load of the first network, including the first network element, may be reduced and an additional service may be delivered to the users of the first network. The second network element may belong to a second network that is more appropriate to transmit the data than the first network. If the first network is a telephone network and the second network is a short range network, for instance a WLAN network, then it may be cheaper to transmit data via the WLAN then via the telephone network. The WLAN network may be located, for instance, in an internet café or in an office.

The transmission channel may be established at least in part or completely for the transmission of the first data. This results in a very fast change of radio channels, because no parameters or only a few parameters have to be changed to establish the transmission channel immediately before changing the radio channels.

Alternatively, the transmission channel may be established after the transmission of the first data, especially after an initiation of a change from the first radio channel to the second radio channel. This measure results in that only such network resources are used that are needed at the moment.

The first network element may not be used for the transmission of the third data. This means, that the third data are only transmitted via the second network. The transmission channel is also not used for the transmission of the third data. Therefore, the transmission channel is only used during the time in which the change of the radio channels takes place. After the change of the radio channels the transmission channel may be used for another change of other transmission channel, for instance to a second user device or to a third user device.

The first data and the second data may be transmitted without changing a connection segment and/or without changing parameters describing the connection segment that ends at the second device. The second device may not even notice that a change of radio channels takes place at the other end of the connection. Connection relates here to physical connections via lines or radio channels and also to connections that are only established in higher protocol layers but not in lower protocol layers as it is typical for the transmission of data packets.

The first network may be part of a mobile telephone network, especially a GSM network, an UMTS network or an LTE (Long Term Evolution) network, or of a WiMAX (Worldwide interoperability for Microwave Access) network, see IEEE 802.16. For these networks the following standards apply, for instance:
- for GSM: 3GPP (Third Generation Partnership Project) 00 series to 11 series and 41 series to 55 series, for UMTS: 3GPP 21 series to 35 series,
- for LTE: 3GPP 25.814 "technical specification group radio access network: physical layer aspects for evolved UTRA (Universal Terrestrical Radio Access), for WiMAX: IEEE 802.16.

The second network may be part of a short range network compared with the range of the first network, i.e. the network to which the first network element belongs. An example for a short range network is a WLAN according to IEEE802.11. Another example for a short range network is a Bluetooth network or a Bluetooth connection. This means that the first network and the second network operate according to different signalling protocols and/or according to different transmission protocols. The first network and the second network may be operated by different operators.

Alternatively, the first network may be a short range network and the second network may be a telephone network. This means that a change is possible from a short range network to the telephone network, for instance if the user leaves the internet café or the office again.

The transmission channel may be established via a third network, especially via a network that uses the internet protocol IP. This means that the third network operates in a different way compared to the first network and that the third network operates also in a different way compared to the second network. The third network may be the network that allows transmission of data in a more cost effective manner. Relevant protocols for the third network may be the internet protocol (IP) or the TCP (Transmission Control Protocol).

The transmissions channel may be an encrypted channel. Therefore, security for the user data is given. The combination of an encrypted channel and of a pre-defined or pre-established channel gives the advantage that the required parameters may be set before starting the change of the radio channels and even before starting of the data transmission for the connection that is changed. It may be for instance be necessary, to have public and private keys in the first network element and in the second network element. Storing of the public keys and the private keys in the network elements may be performed automatically or manually. However, both procedures take time. Therefore, it is an advantage, if the keys are stored before the change of the radio channels is initiated. Especially, it is possible to achieve no interruption of the transmission or only a short interruption that is for instance shorter than 150 milliseconds during the change.

Alternatively or additionally, the transmission channel may be a transmission tunnel according to a tunnelling protocol, especially for a tunnelling protocol that relates to layer two of a network stack. Layer two uses for instance MAC (Medium Access Control) addresses. Layer two tunnelling protocols are for instance explained in RFC 3931. IETF RFC 3193 relates to the combination of a layer two tunnelling protocol and the internet protocol security protocol. Using this combination it is possible to realize a virtual private network (VPN). The use of VPN gives higher security for the change of the networks and of the radio channels.

The first user device may be a software defined radio device. This means, that there is only a few hardware that may be used only for the first network or only for the second network. Two antennas may be needed, for instance. The main functional units of the transmitting/receiving units of the user device may be realized by software, i.e. a program that is performed by a micro processor. It is possible to have digital filter devices, digital multipliers and so on. The switching between the two networks may be performed by changing the software in the user device. This means that the first user device may transmit data only with the first network element or with the second network.

However, the method mentioned above may also apply, if the user device is a dual device, i.e. it can transmit data to/or from both networks at the same time.

There may be the following steps
- a first control message containing a cell identifier is sent from the first network,
- the control message is received by at least one transmission element of the second network,
- a second control message containing the received cell identifier is sent from the second network to the first network.

The second control message may be transmitted via the third network for instance. By using these steps it is possible to detect the topology of the second network at the boarder between the first network and the second network. The topology of the first network is known in the first network. If the first network also knows the topology of the second network it can compose a network topology that allows mobility between both networks.

Additionally or alternatively, there may be the following steps:
- a signal of the second network is received in the first user device,
- depending on the received signal a second message is sent from the first user device to the first network element, and
- depending on the second control message the changing of the radio channels is further proceeded or initiated.

By performing these steps a simple mechanism for triggering a change of radio channels is given. Given the first user device gets contact with the second network this is signalled to the first network. The first network may control the change between both networks.

User data from the second device may be buffered in the first network element or in the second network element. Buffering takes place especially before a layer two L2 connection between the first device and the second network element is established. Alternatively buffering of this data in both network elements is possible. The buffering of the data allows a switching between the networks, i.e. between the radio channels, without losing data, especially without losing data packets. Furthermore it is possible to decrease the switching delay.

After changing the radio channels a second connection, especially on layer three L3, may be established between the first user device and the second user device for the transmission of the third data. There are a lot of protocols that may be used for this purpose, for instance, mobile IP (MIP) version 4, see RFC (Request For Comment) 3344, mobile IP version 6, see RFC 3775, higher archival mobile IP version 6, see RFC 4140, cost identity protocol (HIP) see RFC 4423 or other protocols. By establishing a second connection the most cost effective path of data transmission may be chosen. All RFC's are IETF (Internet Engineering Task Force) works.

There is also given a composed network, comprising:
- a first network,
- a second network,
- the first network comprising a first network element and a first transmission element,
- the first transmission element comprising at least one first radio channel,
- the second network comprising a second network element and a second transmission element,
- the second transmission element at least one second radio channel,
- a transmission channel between the first network and the second network element,
- and wherein the first network element and the second network element comprise units that use the transmission channel to change a data transmission of a user device from the first radio channel to the second radio channel or from the second radio channel to the first radio channel.
   Therefore, the composed network may be used to perform one of the methods mentioned above. The technical effects mentioned above also apply to the composed network.

The transmission channel of the composed network may again be a permanent channel that is used for a plurality of changes between radio channels of the first network and of the second network. The usage of a permanent channel allows a very fast change between the networks as no parameters or only a few parameters have to be transmitted during the time critical change.

The first radio channel of the composed network may be operated according to a first method that is different from a method according to which the second channel is operated. Typically, the first network operates in a different way than the second network.

The second network element of the composed network may be a router, especially an access router, for instance a WLAN access router. Routers perform forwarding of data packets in a protocol layer 3, for instance in the IP protocol layer. This means, that the IP layer is above the MAC layer for instance.

The composed network may comprise elements to perform the methods mentioned above. Therefore, the technical effects mentioned above also apply to the composed network.

There is also given a router, especially an access router, comprising:
- a control unit that controls the forwarding of data between a transmission channel and a user device, especially forwarding of data packets,
- the transmission channel is between the router and a first network element of a first network,
- the router is part of a second network,
- the user device is reachable via a transmission element that is connected to the router and via a radio channel of the transmission element.
   Most of the technical effects mentioned above also apply to the router as the router is one of the main network elements to perform the methods mentioned above.

The router may be an WLAN router. There are a lot of WLAN routers, i.e. there is a need to incorporate these WLAN networks in telephone networks. The access router may comprise units to perform the methods mentioned above. Again the same technical effects as mentioned above apply to the router.

The foregoing has outlined rather broadly the features and technical advantages of embodiments of the present invention in order that the detailed description of the invention that follows may be better understood. Additional features and advantages of the embodiments of the invention will be described hereinafter. It should be appreciated by those skilled in the art that the conception and the specific embodiments disclosed may be readily utilized as a basis for modifying or designing other structures or processes for carrying out the same purposes of the present invention. It should also be realized by those skilled in the art that such equivalent constructions do not depart from the spirit and scope of the invention as set forth in the appended claims.

For a more complete understanding of the present invention and the advantages thereof, reference is now made to the following description with the accompanying drawings, in which:
- Figure 1: illustrates the architecture of a composed network,
- Figure 2: illustrates the steps for a composition between a WLAN provider and a PLMN with mobility tunnel pre-configuration,
- Figure 3: illustrates databases in two network elements,
- Figure 4: illustrates the possible realization of an inter RAT (Radio Access Technology) handover without parallel radio capabilities in a user device,
- Figure 5: illustrates a serving GPRS (General Packet Radio Service) support node,
- Figure 6: illustrates an access router,
- Figure 7: illustrates a user device, and
- Figure 8: illustrates data flows before, during and after a change of radio channels.

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention. Moreover, the same reference signs refer to the same technical features if not stated otherwise. As far as "may" is used in this application it means the possibility of doing so as well as the actual technical implementation.

The present invention will be described with respect to preferred embodiments in a specific context namely a network that is composed of GSM telephone network and of a WLAN network. The invention also may be applied, however, to other networks and other protocols.

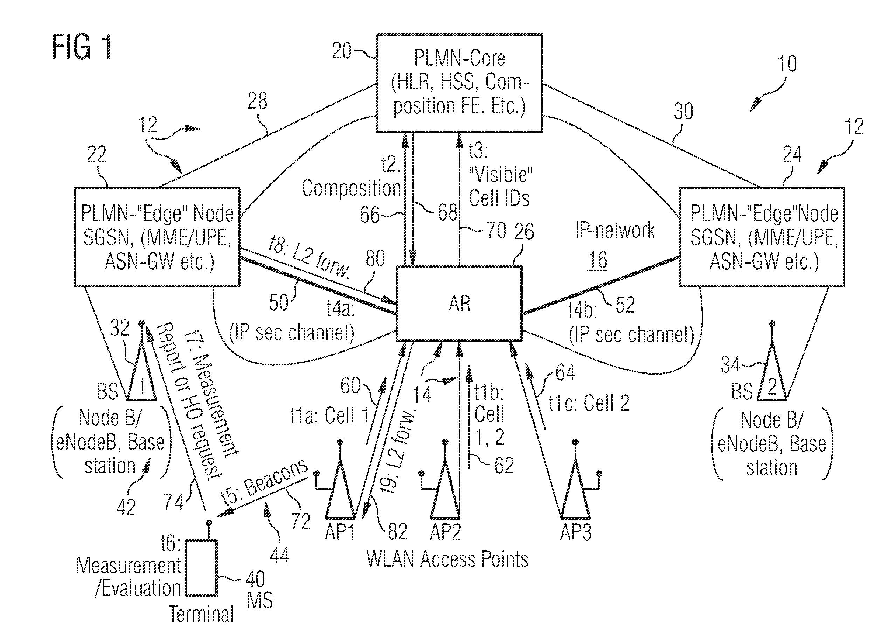

Figure 1 illustrates the architecture of a composed network 10. In the embodiment shown in Figure 1 the composed network 10 contains:
- a telephone network 12,
- an access network 14, and
- an IP network 16.

The telephone network 12 is operated by only one operator. The telephone network 12 is for example a PLMN (Public Land Mobile Network), for instance a GSM network. However, in other embodiments more than one telephone network may be involved, i.e. telephone networks of more than one operator.

The access network 14 is for example a WLAN, for instance located in an internet café or in an office.

The IP network 16 operates according to the internet protocol and according to the internet protocol suite, for instance according to TCP (Transmission Control Protocol) or according to UDP (User Datagram Protocol). Network 16 may be used as an intermediate network between telephone network 12 and access network 14. This will be explained in more details below.

Telephone network 12 comprises:
- a core network 20,
- edge nodes 22, 24, and
- base stations 32 and 34.

Core network 20 comprises for instance the home location register HLR, i.e. a database that comprises data of subscribers or users of telephone network 12. Furthermore the core network 20 comprises a composition unit (Functional Entity FE) the functions of which are described in more detail below.

The core network 20 is connected to edge node 22 and to edge node 24, see lines 28 and 30 respectively. Both edge nodes 22 and 24 are serving GPRS support nodes SGSN in the embodiment.

This means that data packets, especially according to the internet protocol, may be transmitted via edge node 22 and 24. Base station 32 is connected to edge node 22, for instance via a line. Accordingly, base station 34 is connected to edge node 24 via a further line.

Access router 26 is connected to three access points AP1 to AP3, for instance via the internet. Access AP1, AP2 and AP3 are WLAN access points. Access router 26 performs routing for IP data packets that are transmitted to and from access AP1 to AP3. In other embodiments there may be only be one access point AP1, only two access points AP1, AP2 or more than three access points connected to access router 26.

Access router 26 may be regarded as a gateway GPRS support node after a handover/handoff from network 12 to network 14. Access router 26, edge nodes 22, 24 and core network 20 are connected to IP network 16. Therefore, it is possible to transfer data or control messages between the access router 26 and the core network 20, between access router 26 and edge node 22 or between access router 26 and edge node 24. Furthermore, there are two IP security channels 50 and 52 between access router 26 and edge node 22 and edge node 24 respectively. Both channels 50 and 52 are permanent channels that are used for a plurality of transmission transfers between network 12 and network 14. It is possible to change from network 12 to network 14 or vice versa.

Figure 1 also shows one user terminal 40 that is also named as mobile station in GSM and a user of user terminal 40 may use it in both networks 12 and 14. This will be described in more detail below.

A first radio transmission channel 42 is between base station 32 and user terminal 40. A second radio transmitting channel 44 is between user terminal 40 and access point AP1. There was a Service Level Agreement SLA between the operator of telephone network 12 and the operator of network 14.

According to this Service Level Agreement it should be possible for subscribers or users of telephone network 12 to change to network 14. It should also be possible to change or to change back from network 14 to network 12. The technical data describing the Service Level Agreement is stored in the composition unit of core network 20. Furthermore, data that relates to network 14 may be stored, for instance in a chip card, for instance in an USIM (Universal Subscriber Identity Module)of the WLAN provider.

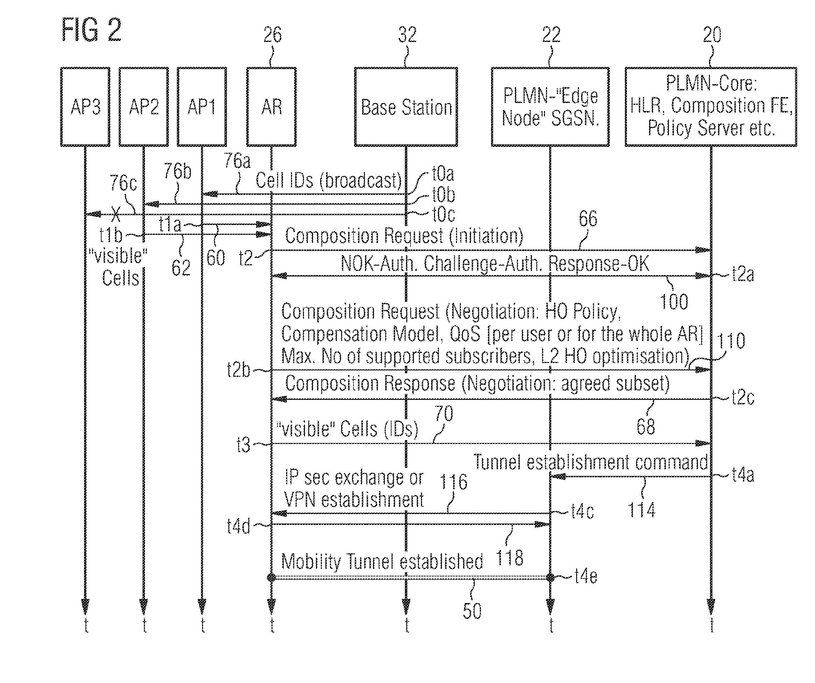

When the WLAN 14 is set up, the access points AP1 to AP3 transmit cell information to access router 26. The gathering of this cell information will be explained in more detail below with regard to Figure 2. The cell information of access point AP1 is transmitted at time t1a. It is assumed that access point AP1 does only receive cell information from base station 32, i.e. a cell 1 in the embodiment.

Access point AP2 receives cell information from base station 32 and from base station 34 as it is located in the middle between base station 32 and 34. Therefore access point AP2 sends cell information regarding to cell 1 and cell 2 to the access router at time t1p. Access point AP3 is located nearer to base station 34 than to base station 32. Therefore it receives only cell information from base station 34 but not from base station 32. It is assumed that base station 34 belongs to cell 2. Therefore access point AP3 sends cell information of cell 2 to access router 26 at time t1c.

The target address of the responsible PLMN core network is for instance also stored in the USIM card of access router 26. Access router 26 uses the information from its USIM card to connect to core network 20. Access router 26 sends its IP address or its IP addresses to core network 20. Furthermore, it sends the cell information gathered from the access points AP1 to AP3 to the core network 20. The transmission of these data is called composition and is performed at time t2. Messages 66 relate to this composition procedure. Core network 20 responds to access router 26 during composition, see messages 68.

Access router 26 transmits the cell IDs (Identification) that are access points AP1 to AP3 can "see" to core network 20 at time t3. Triggered by the core network 20 the edge nodes 22 and 24, i.e. the edge nodes that are responsible for the cell identification messages that were sent by base stations 32 and 34 establish the channels 50 and 52. Base stations 32 and 34 are the base stations that cover the area of network 14.

The channels 50, 52 can then be used in a similar way to "horizontal" interfaces of the GSM network 12 for mobility support.

If terminal 40 which is connected via the wide range air interface of network 12 comes into contact with access point AP1, for instance by receiving cell information from access point AP1, it may perform measurement and evaluation of the signal quality. A "beacon" 72 is received from access point AP1 at time t5 in user terminal 40. Measurement and/or evaluation of beacon 72 are performed in user terminal 40 at time t6.

The following handover or handoff may be network initiated or terminal initiated. Depending on whether or not an inter RAT handover is network initiated or terminal initiated the user terminal 40 will send a handover request or a measurement report to edge node 22 via base station 32, see message 74 at time t7.

In order to improve the handover performance, i.e. to reduce the disruption time and to minimize packet loss, the preconfigured channel 50 is used for data forwarding from edge node 22 to access router 26. In the embodiment the access router 26 buffers the data packets that can not be sent immediately, i.e. until the link in the WLAN is established. User data for user terminal 40 is forwarded via channel 50 at time t8. This is a layer two forwarding, i.e. MAC addresses are used for instance.

Access router 26 forwards data received via channel 50 as soon as radio channel 44 is establish via access point AP1 to user terminal 40, see time t9. Again layer two L2 forwarding is used for access router 28, i.e. using MAC addresses. This forwarding is also named switching.

After or during the transmission of the forwarding of data received via channel 50 user terminal 40 tries to establish a new layer three L3 connection to the original communication partner. This may be done by using one of the mobility IP protocols. In these protocols each user terminal 40 has a home address and one or more care-of addresses. In the embodiment shown in Figure 1, an old care-of address may be used for receiving data via radio channel 42 and for receiving data that was forwarded via channel 50 and via radio channel 72. However, care of address may be used for data that is only transmitted over access router 26 but not over edge node 22 and channel 50. The new care-of (CoA) address of user terminal 40 may be requested by DHCP (Dynamic Host Control Protocol) from access router 26 or a DHCP server. Alternatively stateless auto configuration may be used to get the new care-of address for user terminal 40.

In another embodiment there is only one edge node 22.
Alternatively, there may be more than two edge nodes 22, 24 that have base stations near network 14.

In other embodiments edge node 22 belongs to the network of the first operator and edge node 24 belongs to the network of a second operator. Nevertheless, it is possible to perform a changing of radio channels as described, if both operators have corresponding agreements.

In other embodiments there is more than access router in network 14.

The critical part of switching radio channels is the downlink direction, i.e. from user device to network. Data transmission in uplink direction is easier as user terminal 40 knows the time at which it uses the new radio channel 44. Therefore channels 50 and 52 may be used only in downlink direction. However it is also possible to use these channels or parallel channels for data transmission in an uplink direction.

Figure 2 illustrates the steps for composition between the WLAN provider and the PLMN with mobility tunnel pre-configuration. At times t0a, t0b and t0c that are before time t1a base station 32 sends a broadcast message with its own ID. Although three broadcast messages 76a, 76b and 76c are shown in Figure 2 only one message may be used. Broadcast message 76a illustrates that the broadcast message is received by access point AP1. Broadcast message 76b shows that the broadcast message is also received by access point AP2. However the broadcast message is not received by access point AP3, see broadcast message 76c. The reason for this is for instance, that the distance between base station 32 and access point AP3 is too long.

At time t1a access point AP1 sends the cell ID that it has received in broadcast message 76a to access router 26, see message 60. At time t1b access point AP2 sends the cell id that it has received with broadcast message 76b to access router 26, see message 62. However, access point AP3 does not send a cell ID of base station 32 to access router 26 as it has not received the broadcast message 76c. Therefore cell 1 is only "visible" for access points AP1 and AP2.

At time t2, access router 26 sends composition request message or messages 66 to core network 20. This initiates the composition of both networks 12 and 14. Beginning at time t2a the messages 100 are changed between access router 26 and core network 20 that include for instance challenge-response mechanisms for authentication. Depending on the result of authentication an OK message or OK messages are transmitted between access router 26 and core network 20. However, if the authentication failed, a NOK (Not OK) is transmitted between access router 26 and core network 20.

At time t2b, a composition request message is sent from access router to core network 20. Composition request 110 comprises the following parameter:
- negotiation: hand over policy, for instance that handover should not be applied for speech only,
- compensation model, i.e. who gets how much money for the change of networks 12 to 14,
- quality of service QoS, the QoS may be selected on a user basis or for the whole access router depending on the band width of channel 50 according to the service level agreement,
- maximum number of supported subscribers,
- pre-reserved quality of service between first network and second network in order to guarantee that during handover execution the specified quality of service is available without further signalling,
- layer two L2 handover optimisation, for instance regarding too fast MIP (Mobile IP), or a data buffer that may be used in access router 26 or in edge node 22.
   Of course, further parameters or other parameters may be exchanged between access router 26 and core network 20.

If core network 20 agrees to the parameters of message 110 it sends the composition response message 68 containing the parameter "negotiation: agreed subset". However, if core network 20 does not agree to the parameters in message 110 other parameters may be negotiated between access router 26 and core network 20.

A Message 70 including the cell ids of the "visible" cells is sent at time t3 from access router 26 to core network 20. At time t4a, core network 20 sends a message 114 to edge node 22 as a tunnel establishment command.

Edge node 22 controls establishment of an IP security exchange channel or of a VPN (Virtual Private Network) at time t4c, see messages 116. Access router 26 confirms the establishment of the IP security channel 50 or of a VPN connection with message 118 at time t4d.

At time t4e, mobility channel or mobility tunnel 50 is established between access router 26 and edge node 22. IP security is described for instance in RFC (Request For Comment) 2401, 2409. Layer two L2 tunnelling protocols are described for instance in RFC 2661 or in the newer RFC 3931. RFC 3193 relates to securing layer two L2 tunnelling protocols using IP security for instance as follows:
- negotiation of IP sec security association (SA), typically through internet key exchange (IKE). This is carried out for instance over UDP port 500 and how many users either a shared password, public keys, or X.509 certificates on both ends, also other keying methods exist.
- Establishing of encapsulating security payload ESP communication and transport mode. At this point, a secure channel has been established but no tunnelling is taking place.
- Negotiation and establishment of layer two L2 tunnelling protocol tunnel between the SA end points. This negotiation relates to tunnel IDs and session IDs, for instance.
   In other embodiments the sequence of messages 66 to 118 may be changed. For instance it is possible to send message 70 before message 66 and so on.

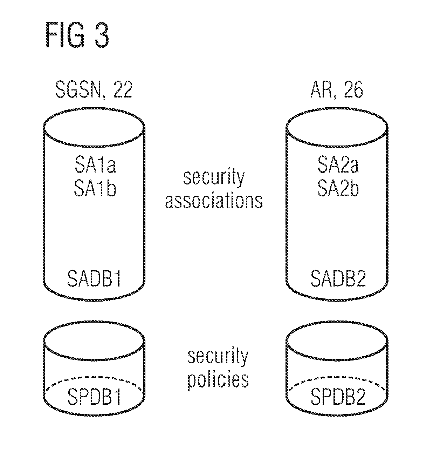

Figure 3 illustrates the following data bases in edge node 22:
- a security association database SADB1,
- a security policy database SPDB1.

In access router 26 there are the following databases with regard to IPSec:
- a security associations database SADB2, and a security policy database SPDB2.
   Security policies stored in databases SPDB1 and SPDB2 relate to rules how tunnel 50 shall be used, for instance it is possible to process different data types in a different way.

Security associations SA1a and SA2a relate to tunnel 50. These security associations describe a particular secure connection between edge node 22 and access router 26.
However, there may be other security associations for further tunnels between edge node 22 and access router 26, for instance to enable two changes at the same moment. In other embodiments only one database may be used in edge node 22 or access router 26 that stores security associations and security policies. Also distributed data bases are possible.

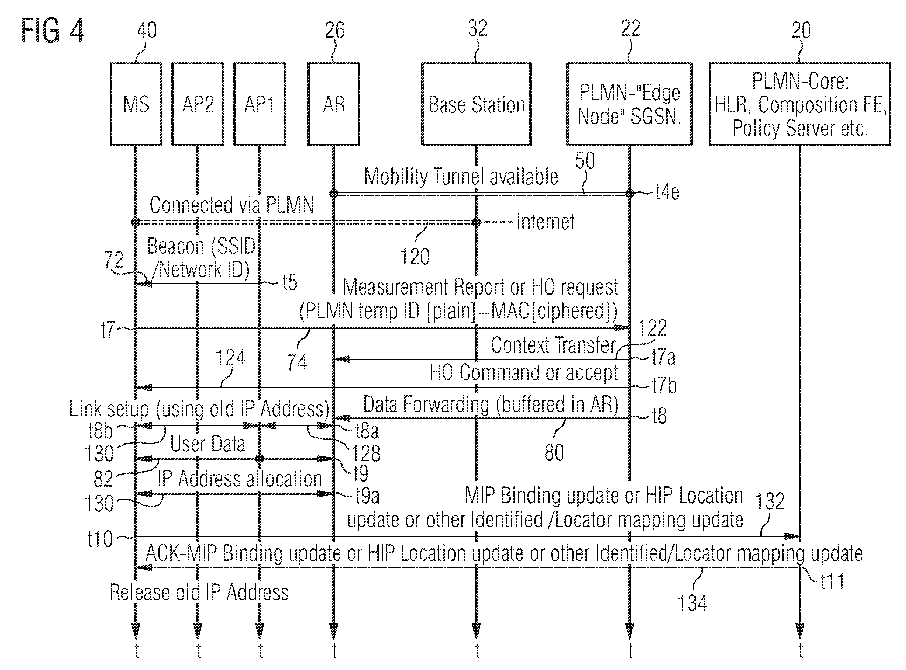

Figure 4 illustrates a possible realization of an inter RAT handover without parallel radio capabilities in a user device. As already described mobility channel or mobility tunnel is a available at time t4e. After establishing channel 50 a connection via network 12 is established between a user device or server at one side and between user terminal 40 at the other side, see connection 120 between base station 32 and user terminal 40. Connection 120 may have a further segment between base station 32 and the server or the second device, for instance in the internet 16. Alternatively the second device or the server may be located in telephone network 12, for instance.

The "beacon" 72 is sent at time t5. Message 72 contains for instance a service set identifier SSID and/or a network ID that identifies WLAN 14. Beacon 72 is the first message that user device 40 receives from network 14.

At time t7 user terminal 40 sends message 74 to edge node 22 via radio channel 42. Message 74 is a measurement report or a handover request if the strength of the signal of beacon 72 allows a handover. Message 74 comprises for instance:
- PLNM temporary identifier (plain), i.e. not encrypted, e.g. TMSI (Temporary Mobile Subscriber Identifier),
- the MAC address of access point AP1 that was contained in message 72, this MAC address may be used later to tell access router 26 to which access point AP1 to AP3 the data of the connection to user terminal 40 should be forwarded.

Edge node 22 sends a message 122 to access router 26 at time t7a. Message 122 contains the context of the connection to the user terminal 40. This context uses for instance:
- cipher keys for user data, and
- current quality of service,
- e.g. those parameters which correspond to information elements in the context transfer message of UMTS RNC relocation procedure.
   A Handover command message 124 or accept message is sent from edge node 22 to user terminal 40 at time t7b to signal that a handover can take place or that it is accepted.

Edge node 22 forwards data for user terminal 40 from now on via channel 50 to access router 26, see time t8. No user data is transmitted to user terminal 40 via radio channel 42 any more.

Access Router 26 buffers data that is received via tunnel 50. Furthermore, access router 26 tries to establish a connection or a link to user terminal 40 via access point AP1 using the old IP address of user terminal 40. The old IP address is known for instance from context data received with message 122 in access router 26. Messages 128 and 130 refer to link setup between access router 26 and user terminal 40. User data received via tunnel 50 is transmitted from access router 26 via access point AP1 to user terminal 40 at time t9, see data flow 82.

At time t9a that is after time t9 or that may be before this time, IP address allocation takes place between access router 26 and user terminal 40, for instance by DHCP or by stateless auto configuration of IP version 6. In stateless auto configuration the MAC address of user terminal 40 and a network prefix are used to create a new IP address for user terminal 40. The prefix data may be received from access router 26 in user device 14.

At time t10 user terminal 40 uses the new IP address to initiate a new data path from/to the second user device or from/to the server. The address of the second user device or of the server is known from the source address in user data 82. User terminal 40 performs MIP (Mobile IP) binding update or alternative HIP (Host Identity Protocol) location update or some other identified or locator mapping update. Host identity protocol may allow higher security than MIP.

At time t11 the MIP binding update or the HIP location update or the other identified/locating mapping update is confirmed from the side of the second user device or the server, see message 134.

Therefore, user terminal 40 releases the old IP address and uses only the new IP address. This means, that a new IP connection is established between user terminal 40 and second user device or server.

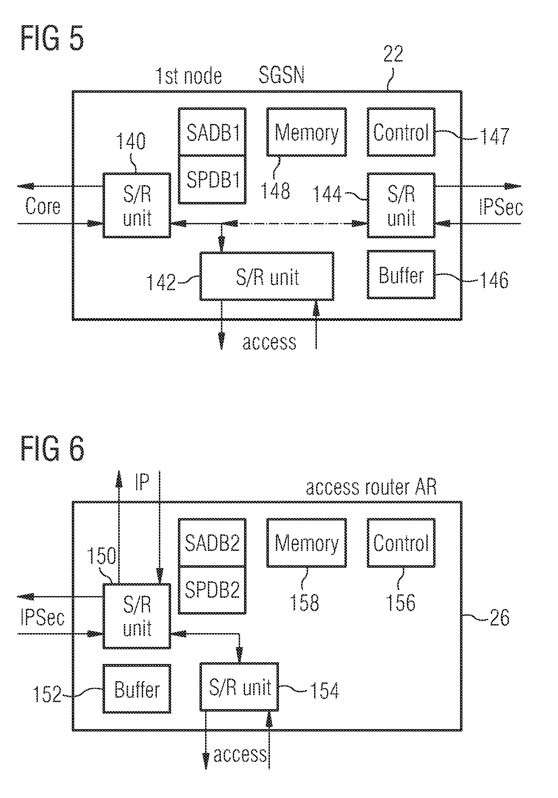

Figure 5 illustrates edge node 22, i.e. a serving GPRS support node, for instance. Node 22 comprises the following units:
- a sending/receiving unit 140 that receives data from core network 20 or that sends to core network 20,
- a sending/receiving unit 142 that sends data to mobile stations, especially to mobile station 32,
- an optional buffer memory 146, that may be used for buffering of data that should be transmitted via tunnel 50,
- a sending/receiving unit 144 that is connected with tunnel 50, i.e. it transmits according to IPSec protocol suite,
- a control unit 147 that controls the other units 140 to 144 of edge node 22, and
- a memory unit 148 that may store parameters and or a program that is performed by a micro processor to perform control of edge node 22.
   Edge node 22 may also comprise the security association database SADB1 and the security policy database SPDB1. Alternatively, these databases may be located in an external server. In another embodiment edge node 22 may also comprise the whole or parts of base station 32.

Figure 6 illustrates access router 26, comprising:
- a sending/receiving unit 150 that is connected with security channel 50 and with internet 16,
- a buffer memory 152 for buffering of data that is received via tunnel 50,
- a sending/receiving unit 154 that is connected with access points AP1 to AP3,
- a control unit 156 for controlling the other units of access router 26,
- a memory unit 158 that stores parameters that are used in access router 26 and/or that stores a program that is executed by a micro processor to realize control functions of control unit 156, and
- databases SADB2 and SPDB2, which may optionally may be located outside of access router 26.
   In another embodiment access router 26 comprises also parts or the whole access point AP1. Sending/receiving unit 150 may be implemented together with sending/receiving unit 156 in a further embodiment. Access router 26 may be regarded as a gateway GPRS support node after changing of radio channels 42, 44.

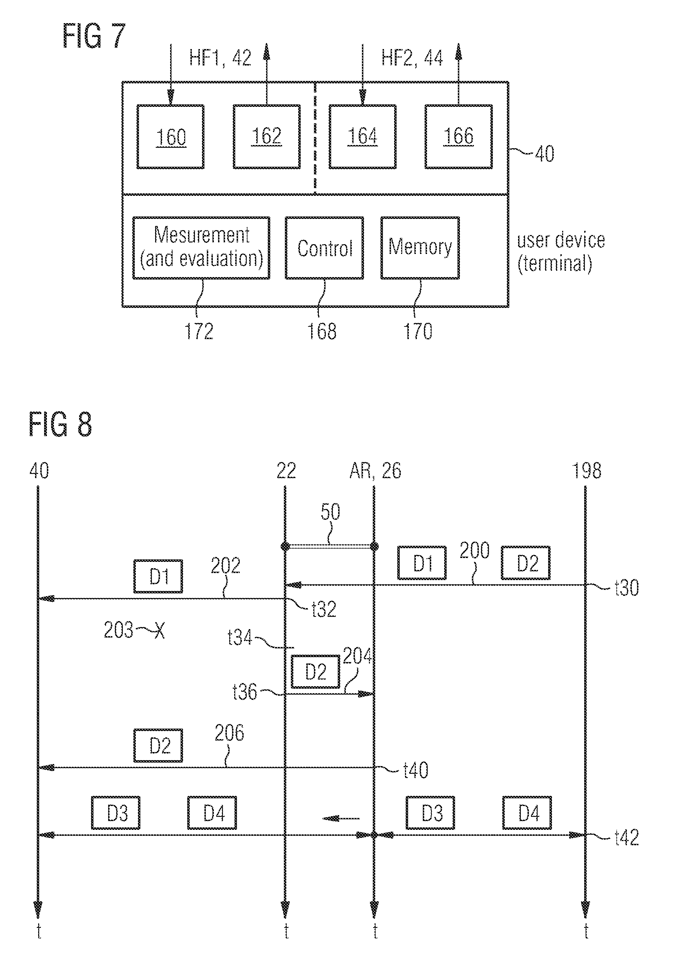

Figure 7 shows user device 40 comprising:
- a receiving unit 160 of radio channel 42,
- a sending unit 162 of radio channel 42,
- a receiving unit 164 of radio channel 44,
- a sending unit 166 of radio channel 44,
- a control unit 168 for controlling the other units of user terminal 40,
- a memory unit 170 for storing parameters and/or for storing software that is used for controlling user terminal 40, and
- a measurement and/or evaluation unit 172 that is used to initiate a change of radio channels 42 and 44.
   User device 40 is a software defined user device that allows to switch software that is use to realize the functions of units 160 and 162 to a software that realizes the functions of units 164 and 166. Only one function is possible at one time.

It will also understood that each block in Figures 5 to Figure 7 and combinations of blocks can be implemented by special purpose hardware based computer systems which perform the specified function.

Figure 8 illustrates data flows before, during and after a change of radio channels 42 and 44. Again channel 50 is already established because it is a permanent channel. At time t30 the second user device 198 or the server 198 sends data packets D1 and D2 to edge node 22, see user data 200.

Edge node 22 sends data packet D1 to user terminal 40 at time t32. However because radio channel 42 is not used anymore at time t34, see cross 203, it is not possible for edge node 22 to forward data packet D2 to user terminal 40 via channel 42.

Therefore, edge node 22 uses channel 50 to forward data packet D1 to access router 26 at time t36.

Access router 26 stores data packet D2 in buffer memory 152 until channel 44 may be used. This is the case at time t40. Therefore, access router 26 forwards data packet D2 at time t40 to user terminal 40. At time t42 user terminal 40 and user device 198 or server 198 establish a new IP connection that is used for the transfer of further data packets D3 and D4. These data packets D3 and D4 are forwarded via access router 26 to user terminal 40.

All data packets D1 to D4 may belong to the same service for instance to the same video, to the same telephone call or to the same file transfer. There may be no interruption in user device 40 or there may be an interruption that is shorter than 50 milliseconds, for instance.

In other embodiments, instead of GSM network 12 a UMTS network or an LTE network is used. In this case edge node 22 is replaced by a mobile management entity/user plain entity MME/UPE. Base station 32 is replaced by a node B or an eNode B. Mobile station 40 is replaced by user equipment UE. The home location register HLR is located in HSS (Home Subscriber Server).

In another embodiment, network 12 is replaced by a WiMAX network. In this case edge node 22 is replaced by an access service node gateway ASN GW. Base station 32 is replaced by a base station that works according to the WiMAX standard.

In a next embodiment, instead of WLAN 14 a different kind of network is used together with GSM, UMTS or LTE or WiMAX. It is, for instance, possible to use a Bluetooth connection or a Bluetooth network instead of WLAN 14.

In other words, using of network composition by pre-configuring a "mobility channel or a mobility tunnel" is described for increasing handover performance for inter RAT handovers/handoffs. If the coverage of a PLMN (e.g. UMTS) is enhanced by alternative (short range) access networks, e.g. WLAN it is currently not clear how to provide a coverage mapping between the access points of the alternative network and the wide range technology, for instance 3GPP, in an automated manner. Mapping refers here to a rule that states from which access point to which base station or vice versa handovers are possible. Such mapping facilitates make-before-break handovers for non parallel radio terminals and thereby increases handover performance.

Currently the seamlessness of inter RAT (radio access technology) handover relies on the availability of parallel radio at the terminals, which could vanish if software defined radio (SDR) terminals are to be used. Also, several IETF drafts describe how to perform make-before-break handovers (Fast MIP or FMIP), but this requires coordination between the access routers. If the access routers are not controlled by the same network (administrative domain), no mechanism was found that supports such inter network node coordination in an automated manner.

WLAN access providers shall be able to purchase a U(SIM) card or a comparable authentication facility which is to be used in each access router of the envisaged WLAN or other short range alternative access system or "sub" - network. Each access point shall be equipped with a receiver for the surrounding wide range PLMN (Public LAND Mobile Network) radio signals, for instance GPRS, UMTS, LTE, WiMAX etc. When this "sub" - network connects to the operator of the PLMN, it shall send the cell information of all "visible" cells of the PLMN to the PLMN in order to pre-configure secure mobility channels or tunnels. Of course the sub network may also negotiate the available services, the delegation of authentication of new users etc. The mobility channels or mobility tunnels allow intermediate data forwarding during the handover procedure, i.e. which is only used until the layer three L3 connectivity is established in the new network.

Alternatively, the transferred cell IDs may be used to establish even a trusted permanent tunnel (for the current session) which would remove the necessity to perform MIP binding updates to a home agent or a comparable central mobility anchor point and to remove necessity of a new authentication in the wireless LAN network.

The proposed embodiments aim to optimising handover performance for the case that parallel usage of the different radio technologies is not available. This may be the case, for instance due to "power-saving-reasons" or in the case that software defined radio terminals are deployed which have only one HF (High Frequency) device. The embodiments described above relate to the architecture of the envisaged approach: the entities of the wireless LAN network which consists of the access router (AR) and of the access points can be seen in the middle of Figure 1. The access points must be able to receive the cell information which is broadcasted by the surrounding base stations of the wide area PLMN. When the wireless LAN network is set up, the access points transmit received cell information to the access router (1).

Subsequently the access router as the representative node of the wireless LAN network tries to connect to and compose with the PLMN core network. The target address of the responsible PLMN core network shall be preconfigured, e.g. stored on the USIM of the wireless LAN provider (2).

After successful composition the two networks have agreed to inter-work and to support seamless mobility. Subsequently the access router will send the cell information that "its" access points have received from the PLMN core (3).

Triggered by the PLMN core the affected edge node established a secure tunnel to the access router. The secure tunnel or the secure channel can then be used in a similar way for instance the Iur interface of UMTS (between RNCs (Radio Network Controller)) for mobility support (4). The effected "edge nodes" are those which are responsible for those cell indicated in message three, i.e. which are those nodes which are usually located at the border between the RAN (Radio Access Network) and the core network.

The agreement on the "mobility channel or mobility tunnel" mechanism actually to use can be part of the composition negotiation in (2). Examples for such mechanisms are, for instance, those performed via the Iur Interface during RNC (Radio Network Controller) relocation, or those performed in LTE (Long Term Evolution) mobility management via S3, S4, S5a or S5b or FMIP. If a terminal which is connected via the wide range air interfaces comes into contact with the access points, for instance by receiving cell information from it (5), it may perform measurement and evaluation on the signal quality of the received signal (6).

Depending on whether or not such inter RAT handovers are network or terminal initiated the terminal will send a handover request or a measurement report to the edge node. Handover requests are for instance typical for LTE networks. However, in order to improve handover performance, i.e. to reduce the disruption time and to minimize packet loss, the preconfigured channel or preconfigured tunnel is used for data forwarding to the access router and the access router shall buffer the packets that can not be sent until the link in the wireless LAN is established.

"Buffering" may start in node 22 upon handover (t7b). In this case node 26 will pull the buffer data upon link L2 establishment in the second network.

Alternatively node 22 may immediately start tunneling after handover (t7b) and not buffer user data. In this case, node 26 buffers user data until link L2 to the terminal 40 is established after time t8a.

Also embodiments of the present invention and their advantages have been described in detail, it should be understood that various changes, substitutions and alterations can be made therein without departing from the spirit and scope of the invention as defined by the appended claim. For example, it will be readily understood by those skilled in the art that many of the features, functions, processes and methods described herein may be varied while remaining within the scope of the present invention. Moreover, the scope of the present application is not intended to be limited to the particular embodiments of the system, process, manufacture, method or steps described in the present invention. As one of ordinary skill in the art will readily appreciate from the disclosure of the invention systems, processes, manufacture, methods or steps presently existing or to be developed later that perform substantially the same function or achieve substantially the same result as the corresponding embodiments described herein may be utilized according to the present invention. Accordingly, the appended claims are intended to include within their scope such systems, processes, methods or steps.

## Claims

1. Method for changing radio channels (42, 44), comprising:
transmission of first data between (D1) between a first user device and a second device (198) via a first network element (22) and via a first radio channel (42),
using (80) a transmission channel (50) between the first network element (22) and a second network element (26) to transmit second data (D2) between the first user device (40) and the second device (198),
transmission of third data between the first user device (40) and the second device (198) via the second network element (26) and the second radio channel (44).

2. Method according to claim one, wherein the transmission channel (50) is established (114) at least in part or completely before the transmission of the first data (D1).

3. Method according to claim 1 or 2, wherein the transmission channel (50) is established after the transmission of the first data, especially after initiation of a change from the first radio channel (42) to the second radio channel (44).

4. Method according to one of the preceding claims, wherein the first network element (22) is not used for the transmission of the third data (D3).

5. Method according to one of the preceding claims, wherein the first data (D1) and the second data (D2) are transmitted without changing a connection segment and/or without changing parameters describing the connection segment that ends at the second device (198).

6. Method according to one of the preceding claims, wherein the first network element (22) is part of a mobile telephone network (12), especially a GSM network, an UMTS network or an LTE network or a WiMAX network, and/or
wherein the second network element (26) is part of a short range network (14), especially a WLAN, compared to a range of a network which comprises the first network element (22).

7. Method according to one of the preceding claims, wherein the transmission channel (50) is established via a third network (10), especially via a network that uses an internet protocol.

8. Method according to one of the preceding claims, wherein the transmission channel (50) is an encrypted channel.

9. Method according to claim 7 or 8, wherein the transmission channel (50) is a transmission tunnel according to the tunnelling protocol.

10. Method according to one of the preceding claims, wherein the first user device is a software defined radio device.

11. Method according to one of the preceding claims,
wherein:
a first control message (76a) is sent from the first network (12) containing a cell identifier,
the control message (76a) is received by at least one transmission element (AP1) of the second network (14), and
a second control message (70) containing the received cell identifier is sent from the second network (14) to the first network (12).

12. Method according to one of the preceding claims, wherein a signal of the second network (14) is received in the first user device (40), depending on the received signal a second control message (74) is sent from the first user device (40) to the first network element (22), and depending on the second control message (74) the changing of the radio channels (42, 44) is further proceeded or initiated.

13. Method according to one of the preceding claims, wherein user data (D2) from the second device is buffered in the first network element (22) or in the second network element (26).

14. Method according to one of the preceding claims, wherein a second connection is established between the first user device (40) and the second user device (198) for the transmission of the third data (D3) after changing the radio channels (42, 44).

15. Composed network (10), comprising:
a first network (12)
a second network (14)
the first network (12) comprising a first network element (22) and a first transmission element (32),
the first transmission element (32) comprising at least one first radio channel (42),
the second network (14) comprising a second network element (26) and a second transmission element (AP1),
the second transmission element (AP1) comprising at least one radio channel (44),
a transmission channel (50) between the first network element (22) and the second network element (26),
and wherein the first network element (22) and the second network element (26) comprise units that use the transmission channel (50) to change a data transmission of user device (40) from the first radio channel (42) to the second radio channel (44) or from the second radio channel (44) to the first radio channel (42).

16. Composed network (10) according to claim 15, wherein the transmission channel (50) is a permanent channel that is used for a plurality of changes between radio channels (42, 44) of the first network (12) and of the second network (14).

17. Composed network (10) according to claim 15 or 16,
wherein the first radio channel of the composed network is operated according to a first method that is different from a method according to which the second channel is operated.

18. Composed network (10) according to one of the claims 15 17, wherein the second network element (26) is a router, especially an access router and or a WLAN access router.

19. Composed network (10) according to one of the claims 15 to 18 wherein the composed network (10) comprises elements to perform the method according to one of the claims 1 to 14.

20. Router (26), comprising:
a control unit (158) that controls forwarding of data (D1, D2) between a transmission channel (50) and a user device (40), the transmission channel (50) is between the router (26) and
a first network element (22) of a first network (12),
the router (26) is part of a second network (14),
the user device (40) is reachable via a transmission element (AP1) that is connected to the router (26) and via a radio channel (44) of the transmission element (AP1).

21. Router (26) according to claim 20, wherein the router comprises units to perform the method according to one of the claims 1 to 14.
